# EUROPÄISCHE PATENTSCHRIFT

(11) **EP 2 507 592 B1**
(45) Veröffentlichungstag und Bekanntmachung des Hinweises auf die Patenterteilung: **30.01.2019**
(21) Anmeldenummer: 10788252.4
(22) Anmeldetag: 02.12.2010
(51) Int. Cl.: G01D 5/14

(54) **HANDGASDREHGRIFF MIT DREHWINKEL-MESSSYSTEM**
HAND-OPERATED THROTTLE WITH ROTATIONAL ANGLE MEASURING SYSTEM
POIGNÉE D'ACCÉLÉRATION ROTATIVE AVEC SYSTÈME DE MESURE ANGULAIRE

(30) Priorität: 04.12.2009 DE 102009056732
(43) Veröffentlichungstag der Anmeldung: 10.10.2012
(73) Patentinhaber: Hirschmann Automotive GmbH, 6830 Rankweil-Brederis (AT)
(72) Erfinder: DENGLER, Werner, A-5132 Geretsberg (AT); WALSER, Bastien, A-6800 Feldkirch / Altenstadt (AT); KREUTER, Markus, A-6895 Hohenems (AT)
(74) Vertreter: Greif, Thomas
(86) Internationale Anmeldenummer: PCT/EP2010/007321
(87) Internationale Veröffentlichungsnummer: WO 2011/066969

(56) Entgegenhaltungen:
- EP-A1- 1 647 435
- DE-A1- 19 748 115
- DE-A1-102007 023 385
- DE-U1- 20 017 920
- JP-A- 2008 020 299
- US-A1- 2004 065 165
- US-A1- 2009 201 014

## Beschreibung

Die Erfindung betrifft einen Handgasdrehgriff mit einer Sensoranordnung, ausgebildet zur Erfassung der Bewegung eines Elementes, insbesondere ausgebildet zur Erfassung der Rotation einer Welle, aufweisend einen durch das Element bewegbaren Magnet sowie einen Sensor, ausgebildet zur Erfassung der Bewegung des Magneten.

Aus dem Stand der Technik sind bereits insbesondere für Handgasdrehgriffe von Fahrzeugen, aber auch für die Erfassung translatorischer Bewegungen, berührungslos wirkende Sensoranordnungen, insbesondere Drehwinkelsensoren, auf Basis induktiver, kapazitiver, resistiver und hallbasierter Systeme bekannt. Hall-Drehwinkelsysteme unterscheiden sich in Hohlwellensysteme und Systeme, welche an dem Ende (Stumpf) der Welle montiert werden müssen.

Der Erfindung liegt die Aufgabe zugrunde, eine berührungslos wirkende Sensoranordnung zu entwickeln, welche die Nachteile bisherige Systeme bezüglich Fremdfeldeinflüsse drastisch reduziert und die die Auflösung deutlich erhöht.

Diese Aufgabe ist durch die Merkmale des Patentanspruches 1 gelöst.

Einerseits ist erfindungsgemäß vorgesehen, dass der Magnet in drei Magnetsegmente unterteilt ist, wobei jedes Magnetsegment einen eigenen Nord- und Südpol aufweist. Entgegen üblichen zweipoligen Magneten, die nur einen einzigen Nord- und Südpol aufweisen, werden bei der erfindungsgemäßen Sensoranordnung drei Segmente, d. h. drei Pole des Magneten, zur Messung der Position des bewegbaren Elementes genutzt. Dies bewirkt in vorteilhafter Weise, dass z. B. aus einer Drehbewegung von nur 90 Grad die Feldlinien des Magneten eine Winkeländerung von bis zu 360 Grad beschreiben können, die mit dem Sensor erfasst und anschließend ausgewertet werden kann. Der entscheidende Vorteil dabei ist, dass bereits das Roh- bzw. Nutzsignal für die Nutzdatengenerierung entsprechend genau aufgelöst werden kann. Denn bisher bekannte handelsübliche Systeme können bei einer 90 Grad-Magnetwinkeländerung nur eine Auflösung von 12 Bit nutzen, was bei den nachfolgenden Linearisierungen, Skalierungen und Datenwandlungen des Rohsignales mit ebenfalls einer Auflösung von 12 Bit zu mehrmaligen Quantisierungsfehlern führt. Im Gegensatz hierzu können die senkrecht zur Bewegungsrichtung (translatorisch oder rotatorisch) aufgenommenen magnetischen Anteile, d. h. der Feldlinien in X- und in Z-Richtung, zur Berechnung der tatsächlichen Position als Absolutwert herangezogen werden. Vereinfacht kann gesagt werden, dass aus der Funktion Arcustangens (Bx/Bz) auf die Position des Magneten geschlossen werden kann. Hierbei können noch zur Linearisierung weitere Korrekturfaktoren einbezogen werden. Die erfindungsgemäße Sensoranordnung (Messsystem) ist aufgrund des vorzugsweise eingesetzten differenziellen Messverfahrens tolerant gegen temperatur- oder altersbezogene Drift des Magneten.

Weiterhin ist erfindungsgemäß vorgesehen, dass der Sensor außerhalb des Magneten und bei Bewegung des Magneten jeweils direkt gegenüber den magnetischen Polen des jeweiligen Magnetsegmentes angeordnet ist und sich in der Hauptflussrichtung der Magnetfeldlinien befindet. Bei einer Sensoranordnung zur Erfassung rotatorischer Bewegungen eines Elementes befindet sich somit der Sensor, d. h. das magnetisch sensitive Element (vorzugsweise ein Hallsensor) direkt am Außendurchmesser und steht somit direkt gegenüber den magnetischen Polen des Magnetes. Aus der Magnetisierrichtung des Magneten und der Sensoranordnung ergibt sich gegenüber bekannten Anordnungen ein wesentlich vergrößerter Nutz-/Störabstand, da bei den bestehenden bekannten Systemen sich die Sensoren im Nebenfluss (Nebenflussrichtung) der Magnetfeldlinien befinden. Diese sind damit wesentlich störempfindlicher gegen Fremdfelder. D. h., daß mit dieser Anordnung des Sensors in der Hauptflussrichtung der Magnetfeldlinien Fremdeinflüsse wesentlich reduziert werden können.

Die vorstehende Erläuterung der Erfindung gilt für Sensoranordnungen, die entweder translatorische Bewegungen (Hin- und Herbewegung) oder rotatorische Bewegungen ausführen. Bei der konstruktiven Ausgestaltung einer solchen Sensoranordnung kann der Magnet als separates Bauteil hergestellt und anschließend an dem drehbeweglichen oder verschiebbaren Element befestigt werden. Alternativ dazu ist es denkbar, dass der Magnet schon mit Herstellung des bewegbaren Elementes an oder in diesem integriert ist und somit ein Bestandteil des bewegbaren Elementes ist. Ebenso wird in besonders bevorzugter Weise die erfindungsgemäße Sensoranordnung zur Erfassung rotatorischer Bewegungen in einem Hohlwellensystem eingesetzt, wobei daneben aber auch Systeme zu Einsatz kommen können, bei denen die Sensoranordnung am Wellenstumpf montiert ist.

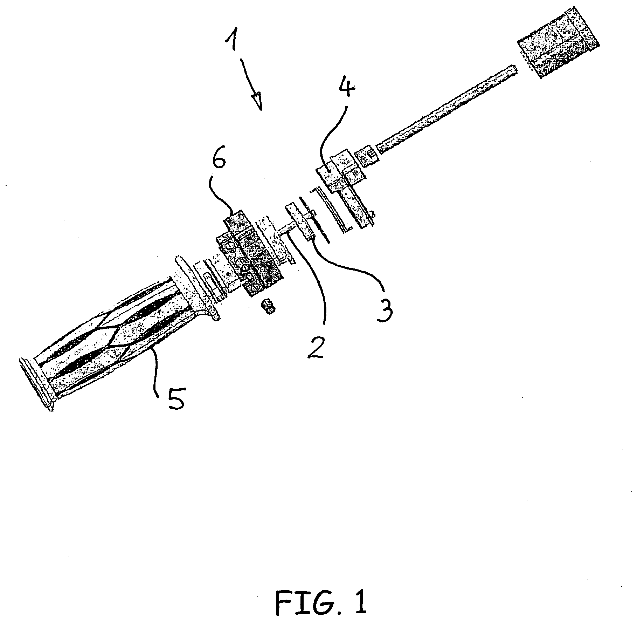

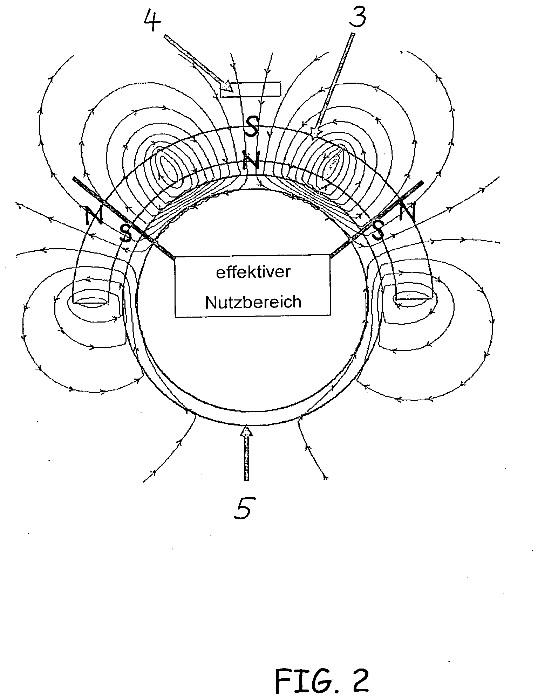

Ein besonders bevorzugtes Ausführungsbeispiel, auf das die Erfindung jedoch nicht beschränkt ist, ist im Folgenden erläutert und in den Figuren 1 und 2 dargestellt.

Die Figur 1 zeigt, soweit im Einzelnen dargestellt, eine Sensoranordnung 1, die in einem Hohlwellensystem zum Einsatz kommt. Die Sensoranordnung bzw. das gezeigte Hohlwellensystem umfasst eine Welle 2, deren Rotationsbewegung (Drehbewegung) mittels der Sensoranordnung 1 erfasst werden soll. Hierzu ist auf der Welle 2 ein Magnet 3 angeordnet. Eine mögliche Anordnung des Magneten 3 ist in Figur 2 gezeigt. Weiterhin umfasst die Sensoranordnung 1 einen Sensor 4, also ein magnetosensitives Element wie z. B. ein Hallsensor (im Falle einer gewünschten Redundanz sind auch zwei oder ggfs. auch mehr als zwei Sensoren einsetzbar).

Mit der in Figur 1 gezeigten Sensoranordnung 1 soll die rotatorische Bewegung eines Handgasdrehgriffes 5 eines Fahrzeuges, wie z. B. eines Motorrades, erfasst werden. Weiterhin umfasst die Sensoranordnung 1 eine nicht näher bezeichnete Steckvorrichtung, mit der die Rohsignale des Sensors 4 in geeigneter Form an eine nachgeschaltete Auswerte- bzw. Steuervorrichtung (bei einem Handgasdrehgriff z. B. ein E-Gassystem) abgegeben werden. Außerdem ist das in Figur 1 gezeigte System so ausgestaltet, dass der Handgasdrehgriff von einer Bedienperson zwischen zwei Anschlägen drehbewegbar ist und einer der Anschläge die Ausgangsposition definiert, aus welcher der Handgasdrehgriff 5 von der Bedienperson herausgedreht werden kann. Diese Drehbewegung erfolgt gegen die Kraft einer Feder, die als Rückstellfeder ausgebildet ist, sodass der Handgasdrehgriff 5 ohne Krafteinwirkung der Bedienperson in seine Ausgangsstellung (Leerlauf) automatisch zurückbewegt wird.

Somit ist in dem Ausführungsbeispiel gemäß Figur 1 erkennbar, dass der Magnet 3 eine runde Bauform aufweist und das bewegbare Element die Welle 2 ist, wobei der Magnet 3 auf der Welle 2 angeordnet und befestigt ist und wobei weiterhin der Sensor 4 direkt benachbart zum Außenumfang des Magneten 3 angeordnet ist. Dabei ist bei Betrachtung der Figur 1 zu berücksichtigen, dass die Sensoranordnung 1 zusammen mit dem Handgasdrehgriff 5 darstellerisch auseinandergezogen ist, um die einzelnen Bauteile darstellen und erkennen zu können. Nach dem Zusammenbau sind die Bauelemente der Sensoranordnung 1, insbesondere der Magnet 3 und der Sensor 4 (einschließlich eine Steckverbindung) in einem Gehäuse 6 der Sensoranordnung 1 untergebracht, die sich an dem einen Ende des Handgasdrehgriffes 5 befindet.

Bei dem Ausführungsbeispiel gemäß Figur 1 ist der Magnet 3 als Scheibe ausgebildet, wobei die Scheibe eine Bohrung aufweist, durch die die Welle 2 geführt ist, damit der Magnet 3 auf der Welle 2 angeordnet und befestigt (z. B. verklebt) werden kann.

Alternativ dazu und zur Erläuterung, dass der Sensor 4 außerhalb des Magneten 3 und bei Bewegung des Magnet 3 jeweils direkt gegenüber den magnetischen Polen des jeweiligen Magnetsegmentes angeordnet ist und sich in der Hauptflussrichtung der Magnetfeldlinien befindet, wird auf die Figur 2 verwiesen. In Figur 2 ist erkennbar, dass der Magnet 3 genau 3 Magnetsegmente aufweist, wobei jedes Magnetsegment einen eigenen Nord- und Südpol N, S aufweist. Zum Verständnis der Anordnung ist auch der Handgasgriff 5 (Griffrohr) schematisch und im Schnitt mit eingezeichnet. Durch die Drehbewegung des Handgasdrehgriffes 5 wird der dargestellte Magnet 3 mit seinen zumindest 3 Magnetsegmenten in Bezug auf den feststehenden Sensor 4 drehbewegt, sodass sich die eingezeichneten Pole N, S des jeweiligen Magnetsegmentes des Magnetes 3 zwischen dem effektiven Nutzbereich (und ggf. darüber hinaus) bewegen können. Diese Drehbewegung wird in vorteilhafter Weise derart von dem Sensor 4 erfasst, dass sich einerseits das magnetisch sensitive Element direkt am Außendurchmesser befindet und somit direkt gegenüber den magnetischen Polen steht und andererseits der Sensor 4 sich in der Hauptflussrichtung der dargstellten Magnetfeldlinien befindet, wobei aus dieser Magnetisierrichtung und der gezeigten Anordnung des Sensors 4 sich ein deutlich vergrößerter Nutz-/Störabstand im Vergleich zu bekannten Systemen einstellt, da der Sensor bei bekannten Systemen sich im Nebenfluss der Magnetfeldlinien befindet und eine derartige Sensoranordnung damit wesentlich störempfindlicher gegen Fremdfelder ist.

Der in Figur 2 gezeigte Magnet 3 mit seinen genau 3 Magnetsegmenten, wobei dieser Magnet 3 ringförmig ausgebildet ist, kann, ebenso wie ein scheibenförmig ausgebildeter Magnet zur Erfassung von Drehbewegungen oder ein sich länglich erstreckender Magnet zur Erfassung von translatorischen Bewegungen einstückig ausgebildet sein, Bestandteil des bewegbaren Elementes sein oder aus mehreren einzelnen oder separat voneinander hergestellten Magnetsegmenten zusammengesetzt sein. So können z. B. zur Realisierung des ringförmigen Magneten 3 gemäß Figur 2 einzelne Ringsegmentmagnete mit einen Polen (so beispielsweise ein Ringsegmentmagnet mit am Außenumfang liegendem Nordpol sowie zwei Ringsegmentmagnete mit am Außenumfang liegendem Südpol (oder umgekehrt) hergestellt und in geeigneter Weise (z. B. durch Verkleben der dergleichen) hergestellt werden. Gleiches gilt selbstverständlich auch für einen sich längs einer Bewegungsrichtung (Hin- und Herbewegung) erstreckenden Magneten, der ebenso in geeigneter Form aus mehreren einzelnen Magnetsegmenten mit eigenen, sich in Bewegungsrichtung abwechselnden Polen ausgebildet sein kann.

Im dargestellten Beispiel der Ausführungsform der Sensoranordnung 1 gemäß der Figuren 1 und 2, insbesondere des ringförmig gestalteten Magnetes 3, werden die senkrecht zur Bewegungsrichtung (bei Betrachtung der Figur 2 eine Drehbewegung um die Längsachse des Handgasdrehgriffes 5 herum) aufgenommenen magnetischen Anteile in der einen und der zumindest weiteren Richtung (insbesondere der X- und der Z-Richtung) der Magnetfeldlinien B (insbesondere Bx und Bz) zur Berechnung der tatsächlichen Position des Handgasgriffes 5 (bezogen auf seine Ausgangsposition) als Absolutwert herangezogen werden. Das bedeutet, dass rechnerisch aus der Funktion von Arcustangens von Bx zu Bz auf die Position des Magneten 3 in Bezug auf den Sensor 4 geschlossen werden kann.

Zusammenfassend realisiert die vorliegende Erfindung also die Vorteile, dass wenige Bauteile für die Sensoranordnung 1 erforderlich sind und diese nach ihrem Zusammenbau kalibrierbar ist. Außerdem sind Längen bei translatorsichen Bewegungen bis zu 400 mm bei einer Auflösung von 0,1 mm realisierbar. Außerdem ist als Vorteil die kostengünstige Herstellbarkeit sowie die Langzeitstabilität bei gleichzeitiger Verringerung der Fremdfeldeinflüsse und deutliche Steigerung der Auflösung zu nennen. Dies gilt analog dazu auch für eine Sensoranordnung 1, die zur Erfassung rotatorischer Bewegungen (insbesondere gemäß dem Ausführungsbeispiel entsprechend Figur 1 und 2) ausgebildet ist.

Die wird erfindungsgemäße Sensoranordnung für die Erfassung von rotatorischen Bewegungen angewendet, bei denen der Drehwinkel < 360 Grad beträgt.

## Patentansprüche

1. Handgasdrehgriff (5) mit einer Sensoranordnung (1), ausgebildet zur Erfassung der Bewegung einer Welle (2) des Handgasdrehgriffes (5), aufweisend einen durch die Welle (2) bewegbaren Magnet (3) sowie einen Sensor (4), ausgebildet zur Erfassung der Bewegung des Magneten (3), wobei der Handgasdrehgriff (5) zwischen zwei Anschlägen über einen Drehwinkel kleiner 360 Grad drehbewegbar ist, **dadurch gekennzeichnet, dass** der Magnet (3) in genau drei Magnetsegmente unterteilt ist, wobei jedes Magnetsegment einen eigenen Nord- und Südpol (N, S) aufweist, dass der Sensor (4) außerhalb des Magneten (3) und bei Bewegung des Magneten (3) jeweils direkt gegenüber den magnetischen Polen des jeweiligen Magnetsegmentes angeordnet ist und sich in der Hauptflußrichtung der Magnetfeldlinien befindet, wobei ein Magnetsegment mit am Aussenumfang liegendem Nordpol sowie jeweils daneben ein Magnetsegment mit am Aussenumfang liegendem Südpol oder ein Magnetsegment mit am Aussenumfang liegendem Südpol sowie jeweils daneben ein Magnetsegment mit am Aussenumfang liegendem Nordpol angeordnet sind, und wobei der Drehwinkel des Handgasdrehgriffes (5) in einem Bereich zwischen der Mitte des einen äusseren Magnetsegmentes und der Mitte des anderen äusseren Magnetsegmentes begrenzt ist, und wobei die zwei Anschläge innerhalb dieses Bereiches angeordnet sind.

2. Handgasdrehgriff (5) nach Anspruch 1, **dadurch gekennzeichnet, dass** der Magnet (3) eine runde Bauform aufweist und auf der Welle (2) angeordnet und befestigt ist, wobei weiterhin der Sensor (4) direkt benachbart zum Außenumfang des Magneten (3) angeordnet ist.

3. Handgasdrehgriff (5) nach einem der vorhergehenden Ansprüche, **dadurch gekennzeichnet; dass** der Magnet (3) als Scheibe oder Ring ausgebildet ist.

## Claims

1. Manual gas rotary handle (5) having a sensor arrangement (1), configured for capturing the movement of a shaft (2) of the manual gas rotary handle (5), having a magnet (3), which is movable by way of the shaft (2), and a sensor (4), configured to capture the movement of the magnet (3), wherein the manual gas rotary handle (5) is rotationally movable between two stops over an angle of rotation of less than 360 degrees, **characterized in that** the magnet (3) is divided into exactly three magnet segments, with each magnet segment having a respective north and south pole (N, S), **in that** the sensor (4) is arranged outside the magnet (3) and, when the magnet (3) moves, in each case directly opposite the magnetic poles of the respective magnet segment and is situated in the main flux direction of the magnetic field lines, wherein arranged are a magnet segment with the north pole located at the outer circumference and in each case next to it a magnet segment with the south pole located at the outer circumference or a magnet segment with the south pole located at the outer circumference and in each case next to it a magnet segment with the north pole located at the outer circumference, and wherein the angle of rotation of the manual gas rotary handle (5) is delimited in a region between the centre of one outer magnet segment and the centre of the other outer magnet segment, and wherein the two stops are arranged within this region.

2. Manual gas rotary handle (5) according to Claim 1, **characterized in that** the magnet (3) has a round structural shape and is arranged on and fixed to the shaft (2), wherein furthermore the sensor (4) is arranged directly adjacent to the outer circumference of the magnet (3).

3. Manual gas rotary handle (5) according to one of the preceding claims, **characterized in that** the magnet (3) is formed as a disc or a ring.

## Revendications

1. Poignée d'accélération rotative (5) avec un agencement de capteur (1), configuré pour détecter le mouvement d'un arbre (2) de la poignée d'accélération rotative (5), présentant un aimant (3) déplaçable au moyen de l'arbre (2) ainsi qu'un capteur (4), conçu pour détecter le mouvement de l'aimant (3), dans laquelle la poignée d'accélération rotative (5) est déplaçable en rotation entre deux butées sur un angle de rotation inférieur à 360 degrés, **caractérisée en ce que** l'aimant (3) est divisé exactement en trois segments d'aimant, dans laquelle chaque segment d'aimant présente ses propres pôles Nord et Sud (N, S), **en ce que** le capteur (4) est disposé à l'extérieur de l'aimant (3) et lors du déplacement de l'aimant (3) chaque fois directement en face des pôles magnétiques du segment d'aimant respectif et se trouve dans la direction de flux principale des lignes de champ magnétique, dans laquelle un segment d'aimant est disposé avec le pôle Nord situé à la périphérie extérieure et un segment d'aimant est disposé respectivement à côté de celui-ci avec le pôle Sud situé à la périphérie extérieure ou un segment d'aimant est disposé avec le pôle Sud situé à la périphérie extérieure et un segment d'aimant est disposé respectivement à côté de celui-ci avec le pôle Nord situé à la périphérie extérieure, et dans laquelle l'angle de rotation de la poignée d'accélération rotative (5) est limité dans une plage comprise entre le milieu d'un premier segment d'aimant extérieur et le milieu de l'autre segment d'aimant extérieur, et dans laquelle les deux butées sont agencées à l'intérieur de cette plage.

2. Poignée d'accélération rotative (5) selon la revendication 1, **caractérisée en ce que** l'aimant (3) présente une forme de construction ronde et est disposé et fixé sur l'arbre (2), dans laquelle le capteur (4) est en outre disposé à proximité immédiate de la périphérie extérieure de l'aimant (3).

3. Poignée d'accélération rotative (5) selon l'une quelconque des revendications précédentes, **caractérisée en ce que** l'aimant (3) est réalisé en forme de disque ou d'anneau.
